# EUROPEAN PATENT APPLICATION

(11) **EP 4 360 928 A1**
(43) Date of publication of application: **01.05.2024**
(21) Application number: 22828134.1
(22) Date of filing: 26.05.2022
(51) Int. Cl.: B60K 13/04, F16H 57/04, H02K 5/20, H02K 7/116, H02K 9/19, H02K 9/193, H02K 11/33

(54) **VEHICLE**

(30) Priority: 24.06.2021 JP 2021105245
(71) Applicant: Jatco Ltd., Shizuoka 417-8585 (JP)
(72) Inventor: MATSUKURA Hideki, Fuji city, Shizuoka 417-8585 (JP)
(74) Representative: Hoefer & Partner Patentanwälte mbB
(86) International application number: PCT/JP2022/021497
(87) International publication number: WO 2022/270215

(57) **Abstract**

[PROBLEM] To effectively use a liquid.

[SOLUTION] A vehicle includes: a housing configured to accommodate a power transmission mechanism; a covering having a portion that covers the housing; and a liquid interposed between an outer surface of the covering and an outer surface of the housing.

## Description

### TECHNICAL FIELD

The present invention relates to a vehicle.

### BACKGROUND ART

Patent Documents 1, 2, and 3 disclose a vehicle equipped with a fuel cell. In a vehicle equipped with a fuel cell, a liquid such as fuel cell drainage, a coolant, or oil flows.

The vehicle is also equipped with a housing that accommodates a power transmission mechanism. Patent Documents 4 and 5 disclose that a housing is provided with a covering as a soundproof member.

### PRIOR ART DOCUMENT

### PATENT DOCUMENT

Patent Document 1: JP 2003-17099 A
Patent Document 2: JP 2010-212126 A
Patent Document 3: JP 2015-209043 A
Patent Document 4: JP 2018-50385 A
Patent Document 5: JP 2008-267465 A

### SUMMARY OF INVENTION

### PROBLEM TO BE SOLVED BY THE INVENTION

A vehicle is required to effectively use a liquid.

### SOLUTIONS TO THE PROBLEM

A vehicle according to an aspect of the present invention is a vehicle including:
a housing configured to accommodate a power transmission mechanism;
a covering having a portion that covers the housing; and
a liquid interposed between an outer surface of the covering and an outer surface of the housing.

A vehicle according to an aspect of the present invention includes:
a housing configured to accommodate a power transmission mechanism; and
a heat exchange unit configured to perform heat exchange between the housing and a liquid that is fuel cell drainage.

### ADVANTAGEOUS EFFECTS OF THE INVENTION

According to an aspect of the present invention, the liquid can be effectively used.

### BRIEF DESCRIPTION OF DRAWINGS

[FIG. 1] FIG. 1 is a skeleton diagram illustrating a unit mounted on a vehicle.
[FIG. 2] FIG. 2 is an external view of the unit.
[FIG. 3] FIG. 3 is a schematic cross-sectional view of the unit.
[FIG. 4] FIG. 4 is an enlarged diagram around a planetary reduction gear.
[FIG. 5] FIG. 5 is a top view of a motor case with a second case member removed.
[FIG. 6] FIG. 6 is a diagram illustrating a circulation system of cooling water in the unit.
[FIG. 7] FIG. 7 is a view illustrating a catch tank of a gear case.
[FIG. 8] FIG. 8 illustrates a covering that covers a housing and a box that introduces a liquid.
[FIG. 9] FIG. 9 is a diagram of FIG. 8 when viewed from a rotation axis direction.
[FIG. 10] FIG. 10 is a view illustrating a vehicle equipped with the unit and a fuel cell.
[FIG. 11] FIG. 11 is a view illustrating a state in which the box is viewed from above together with the housing.
[FIG. 12] FIG. 12 is a view illustrating a cross section of the box taken along line A-A in FIG. 11 together with the housing.
[FIG. 13] FIG. 13 is a schematic diagram illustrating a covering according to Modification 1.
[FIG. 14] FIG. 14 is a schematic diagram of the covering according to Modification 1 when viewed from a rotation axis X direction.
[FIG. 15] FIG. 15 is a diagram illustrating a covering according to Modification 2.

### DESCRIPTION OF EMBODIMENTS

First, definitions of terms in the present description will be described.

A "unit" is also referred to as a "motor unit", a "power transmission device", or the like. The motor unit is a unit that includes at least a motor. The power transmission device is a device that includes at least a power transmission mechanism, and is, for example, a gear mechanism and/or a differential gear mechanism. A unit that is a device including a motor and a power transmission mechanism belongs to concepts of both the motor unit and the power transmission device.

A "housing" accommodates a motor, a gear, and an inverter. The housing includes one or more cases.

"3-in-1" means a form in which a part of a motor case accommodating a motor and a part of an inverter case accommodating an inverter are integrally formed. For example, when a cover and a case constitute one case, in "3-in-1", the case accommodating a motor and the case accommodating an inverter are integrally formed.

A "motor" is a rotating electrical machine that has a motor function and/or a generator function.

When referring to a second element (component, portion, or the like) connected to a first element (component, portion, or the like), the second element (component, portion, or the like) connected downstream of the first element (component, portion, or the like), and the second element (component, portion, or the like) connected upstream of the first element (component, portion, or the like), it means that the first element and the second element are connected such that power can be transmitted. A power input side is upstream, and a power output side is downstream. The first element and the second element may be connected to each other via another element (clutch, other gear mechanism, or the like).

The description "overlap when viewed in a predetermined direction" means that a plurality of elements are disposed in a predetermined direction, and has the same meaning as the description "overlap in a predetermined direction". The "predetermined direction" is, for example, an axial direction, a radial direction, a gravity direction, or a vehicle traveling direction (vehicle forward direction, vehicle backward direction).

When the drawing illustrates that a plurality of elements (components, portions, or the like) are disposed in a predetermined direction, in the description of the present description, it may be considered that there is a sentence explaining that the plurality of elements overlap when viewed in the predetermined direction.

The descriptions "do not overlap when viewed in a predetermined direction" and "offset when viewed in a predetermined direction" mean that a plurality of elements are not disposed in a predetermined direction, and have the same meaning as the descriptions "do not overlap in a predetermined direction" and "offset in a predetermined direction". The "predetermined direction" is, for example, an axial direction, a radial direction, a gravity direction, or a vehicle traveling direction (vehicle forward direction, vehicle backward direction).

When the drawing illustrates that a plurality of elements (components, portions, or the like) are not disposed in a predetermined direction, in the description of the present description, it may be considered that there is a sentence explaining that the plurality of elements do not overlap when viewed in the predetermined direction.

The description "a first element (component, portion, or the like) is positioned between a second element (component, portion, or the like) and a third element (component, portion, or the like) when viewed in a predetermined direction" means that when viewed from the predetermined direction, it can be observed that the first element is between the second element and the third element. The "predetermined direction" is an axial direction, a radial direction, a gravity direction, a vehicle traveling direction (vehicle forward direction, vehicle backward direction), or the like.

For example, when the second element, the first element, and the third element are disposed in this order along the axial direction, it can be said that the first element is positioned between the second element and the third element when viewed in the radial direction. When the drawing illustrates that the first element is positioned between the second element and the third element when viewed in a predetermined direction, in the description of the present description, it may be considered that there is a sentence explaining that the first element is between the second element and the third element when viewed in the predetermined direction.

In a case in which two elements (components, portions, or the like) overlap when viewed in the axial direction, the two elements are coaxial.

The "axial direction" means an axial direction of a rotation axis of a component that constitutes a unit. The "radial direction" means a direction orthogonal to the rotation axis of the component that constitutes the unit. The component is, for example, a motor, a gear mechanism, or a differential gear mechanism.

When a rotating element (for example, sun gear, carrier, or ring gear) of a planetary gear mechanism is "fixed" to another element, the rotating element may be directly fixed or may be fixed via another member.

A "downstream side in a rotation direction" means a downstream side in a rotation direction when a vehicle moves forward or in a rotation direction when the vehicle moves backward. It is preferable to regard it as the downstream side in the rotation direction when the vehicle moves forward, which occurs frequently. A downstream side in a rotation direction of the planetary gear mechanism means a downstream side in a revolution direction of a pinion gear.

A "catch tank" is an element (component, portion, or the like) that has a function of a tank (container) into which oil is introduced. Supplying the oil from an outside of the tank to the tank is expressed as "catch". The catch tank is provided, for example, using at least a part of the housing, or is provided separately from the housing. Integrally forming the catch tank and the housing contributes to a reduction in the number of components.

A "coolant" is a refrigerant and is a type of heat exchange medium. For example, the "coolant" is a liquid (cooling water or the like) or a gas (air or the like). The coolant is a concept that includes oil, but when both the oil and the coolant are described in the present description, it means that the coolant is made of a material different from that of the oil.

A "heat exchange unit" is an element (component, portion, or the like) that exchanges heat between two different heat exchange media. Combinations of the two heat exchange media are, for example, oil and cooling water, cooling water and air, or air and oil. The heat exchange unit includes, for example, a heat exchanger (oil cooler), a flow path through which a coolant flows, and a heat pipe. In the present invention, it is preferable to use a covering that covers the housing as the heat exchange unit.

The covering is a component separate from the housing. For example, a liquid serving as the coolant is introduced between an outer surface of the covering and an outer surface of the housing. Heat exchange between the coolant and the oil and/or air in the housing is performed via a wall portion of the housing.

A "vehicle room" means a room in a vehicle into which passengers enter.

Hereinafter, an embodiment of the present invention will be described.

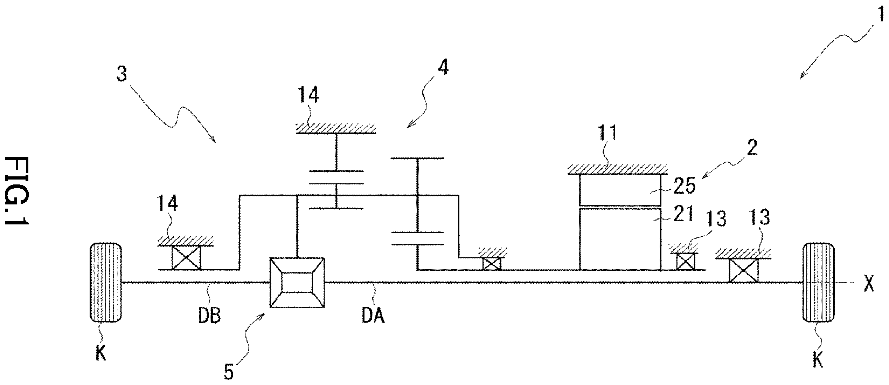

FIG. 1 is a skeleton diagram illustrating a unit mounted on a vehicle.

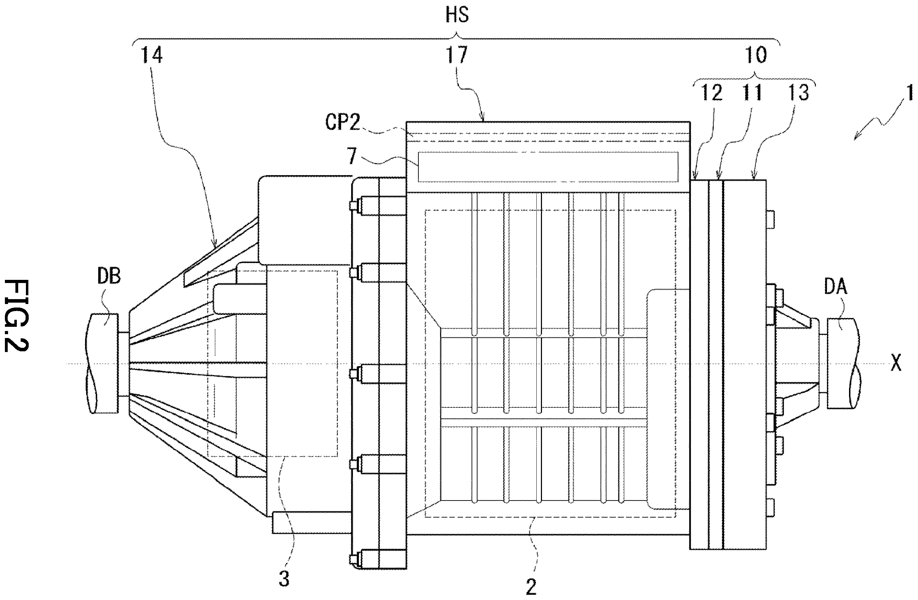

FIG. 2 is an external view of the unit.

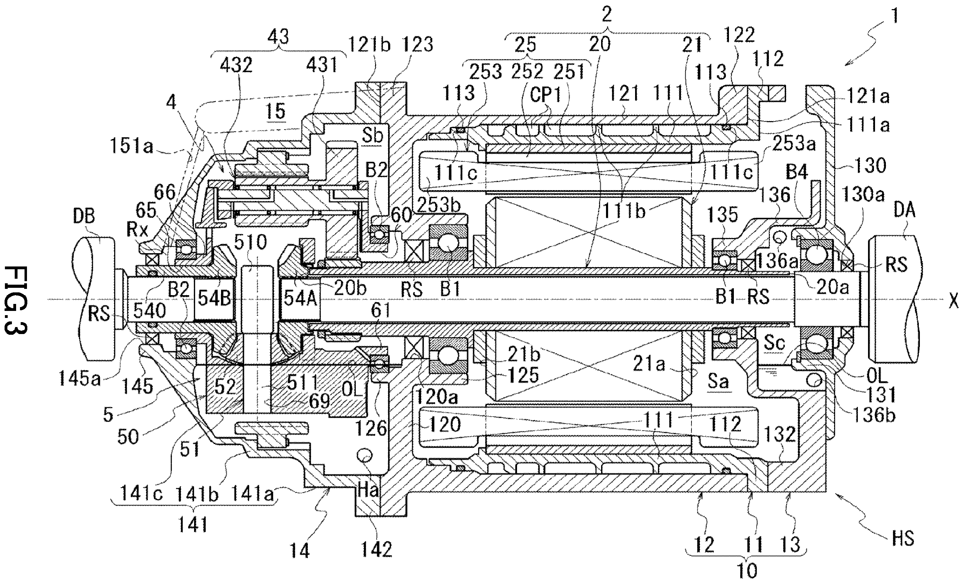

FIG. 3 is a schematic cross-sectional view of the unit. FIG. 3 illustrates a state in which an inverter case is removed.

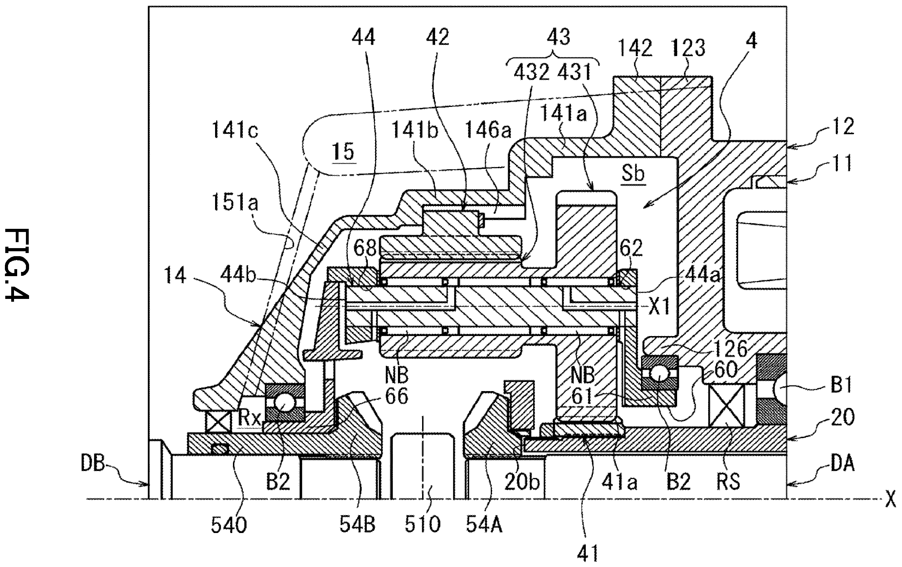

FIG. 4 is an enlarged diagram around a planetary reduction gear.

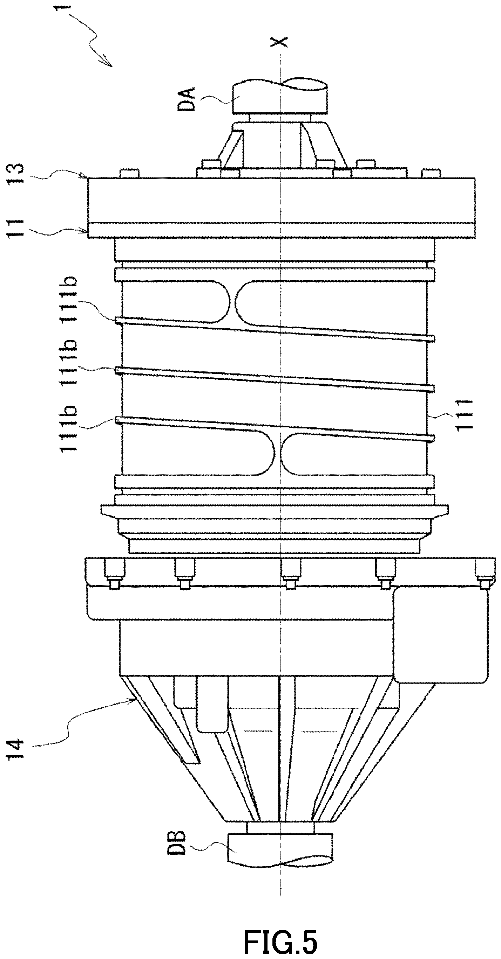

FIG. 5 is a top view of a motor case with a second case member removed.

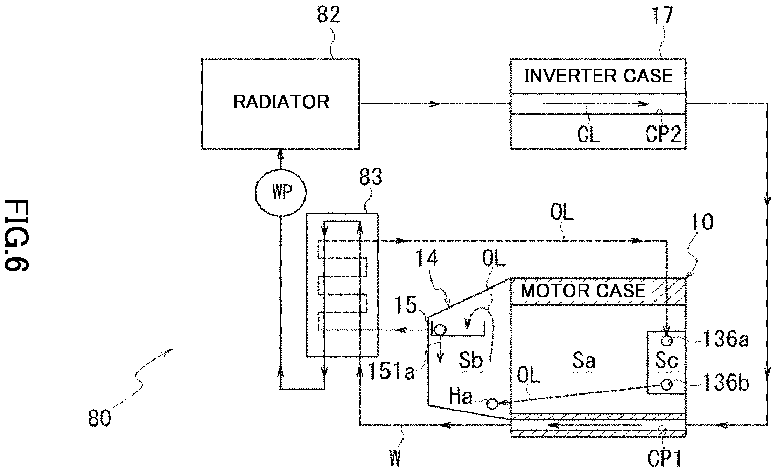

FIG. 6 is a diagram illustrating a circulation system of cooling water in the unit.

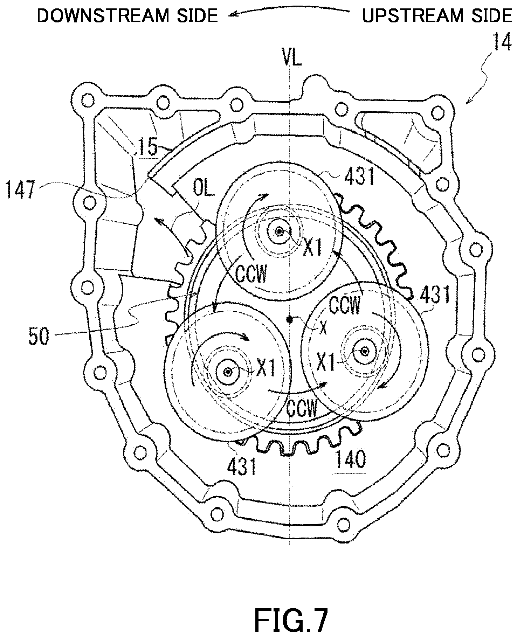

FIG. 7 is a diagram illustrating a catch tank of a gear case.

As illustrated in FIG. 1, a unit 1 is a 3-in-1 unit, and includes a motor 2, a power transmission mechanism 3 that transmits power output from the motor 2 to drive wheels K and K of the vehicle, and an inverter 7 (see FIG. 2) that is a power conversion device of the motor 2.

In the embodiment, as illustrated in FIG. 1, the unit 1 includes, which are the power transmission mechanism 3, a planetary reduction gear 4 (reduction gear mechanism, planetary gear mechanism), a differential mechanism 5 (differential gear mechanism), and drive shafts DA and DB as output shafts.

In the unit 1, the planetary reduction gear 4, the differential mechanism 5, and the drive shafts DA and DB are provided along a transmission path of output rotation around a rotation axis X of the motor 2. Axes of the drive shafts DA and DB are coaxial with the rotation axis X of the motor 2, and the differential mechanism 5 is coaxial with the motor 2.

In the unit 1, the output rotation of the motor 2 is decelerated by the planetary reduction gear 4 and input to the differential mechanism 5, and then transmitted to the left and right drive wheels K and K of the vehicle equipped with the unit 1 via the drive shafts DA and DB.

Here, the planetary reduction gear 4 is connected downstream of the motor 2. The differential mechanism 5 is connected downstream of the motor 2 via the planetary reduction gear 4. The drive shafts DA and DB are connected downstream of the differential mechanism 5.

As illustrated in FIG. 2, the unit 1 includes, as a 3-in-1 type housing, a housing HS that accommodates the motor 2, the power transmission mechanism 3 and the inverter 7. The housing HS includes one or more cases. The housing HS includes, for example, a motor case 10 that accommodates the motor 2, a gear case 14 that accommodates the power transmission mechanism 3, and an inverter case 17 that accommodates the inverter 7. The gear case 14 is joined to one end of the motor case 10 in a rotation axis X direction. The inverter case 17 is joined above the motor case 10 in a gravity direction when the unit 1 is mounted on the vehicle.

The inverter 7 is an electronic component including a smoothing capacitor, a power semi-conductor element, a driver board, and the like. The inverter 7 is electrically connected to the motor 2 inside the motor case 10 by wiring (not illustrated).

In the inverter case 17, a cooling path CP2 through which cooling water CL (see FIG. 6) for cooling the inverter 7 flows is formed.

The motor 2 has a portion that overlaps the differential mechanism 5 (differential gear mechanism) when viewed in an axial direction (see FIG. 3). Here, "when viewed in an axial direction" means when viewed from the rotation axis X direction. "When viewed in a radial direction" means when viewed from the radial direction of the rotation axis X direction.

When viewed in the axial direction, the motor 2 has a portion that overlaps the planetary reduction gear 4 (reduction gear mechanism).

When viewed in the axial direction, the planetary reduction gear 4 (reduction gear mechanism) has a portion that overlaps the differential mechanism 5 (differential gear mechanism).

When viewed in the axial direction, the planetary reduction gear 4 (reduction gear mechanism) has a portion that overlaps the motor 2.

When viewed in the axial direction, the differential mechanism 5 (differential gear mechanism) has a portion that overlaps the planetary reduction gear 4 (reduction gear mechanism).

When viewed in the axial direction, the differential mechanism 5 (differential gear mechanism) has a portion that overlaps the motor 2.

When viewed in the axial direction, the motor 2 has a portion that overlaps the differential mechanism 5 (differential gear mechanism).

As illustrated in FIG. 3, the motor case 10 includes a first case member 11, a second case member 12 fitted onto the first case member 11, and a cover member 13 joined to one end of the first case member 11. The first case member 11 includes a cylindrical support wall portion 111 and a flange-shaped joint portion 112 provided at one end 111a of the support wall portion 111.

The support wall portion 111 is provided in a direction along the rotation axis X of the motor 2. The motor 2 is accommodated inside the support wall portion 111.

The second case member 12 includes a cylindrical peripheral wall portion 121, a flange-shaped joint portion 122 provided at one end 121a of the peripheral wall portion 121, and a flange-shaped joint portion 123 provided at the other end 121b of the peripheral wall portion 121.

The peripheral wall portion 121 of the second case member 12 is formed with an inner diameter that allows the peripheral wall portion 121 to be fitted onto the support wall portion 111 of the first case member 11.

The first case member 11 and the second case member 12 are assembled to each other by fitting the peripheral wall portion 121 of the second case member 12 onto the support wall portion 111 of the first case member 11.

The joint portion 122 at the one end 121a of the peripheral wall portion 121 comes into contact with the joint portion 112 of the first case member 11 from the rotation axis X direction. These joint portions 122 and 112 are connected to each other with bolts (not illustrated).

As illustrated in FIG. 5, a protrusion 111b is provided on an outer periphery of the support wall portion 111 of the first case member 11. The protrusion 111b is a wall surrounding the rotation axis X at intervals. The protrusion 111b of the support wall portion 111 is provided in a spiral shape with a phase shifted from one end toward the other end in the rotation axis X direction. The protrusion 111b surrounds the outer periphery of the support wall portion 111 over entire circumference of the support wall portion 111.

As illustrated in FIG. 3, the peripheral wall portion 121 of the second case member 12 is fitted onto the support wall portion 111 of the first case member 11. In this state, since an inner periphery of the peripheral wall portion 121 comes into contact with an outer periphery of the spiral protrusion 111b of the support wall portion 111, a space is formed between the peripheral wall portion 121 and the support wall portion 111. The space surrounds the rotation axis X with a gap therebetween and is continuously formed in a spiral shape in the rotation axis X direction. The spiral space forms a cooling path CP1 through which the cooling water CL (see FIG. 6), which is a coolant, flows. In FIG. 6, the spiral cooling path CP1 is simplified and illustrated as a straight line.

On the outer periphery of the support wall portion 111 of the first case member 11, ring grooves 111c and 111c are formed on both sides of a region in which the protrusion 111b is provided. Seal rings 113 and 113 are fitted and attached to the ring grooves 111c and 111c.

The seal rings 113 are pressed against the inner periphery of the peripheral wall portion 121 fitted onto the support wall portion 111 to seal gaps between the outer periphery of the support wall portion 111 and the inner periphery of the peripheral wall portion 121.

A wall portion 120 (cover) extending radially inward is provided at the other end 121b of the second case member 12. The wall portion 120 is provided in a direction orthogonal to the rotation axis X. An opening 120a through which the drive shaft DA is inserted is provided in a region of the wall portion 120 that intersects with the rotation axis X.

A tubular motor support portion 125 that surrounds the opening 120a and extends toward the motor 2 is provided on a surface of the wall portion 120 closer to the motor 2 (right side in the drawing).

The motor support portion 125 is inserted inside a coil end 253b, which will be described later. The motor support portion 125 faces an end portion 21b of a rotor core 21 with a gap therebetween in the rotation axis X direction. A bearing B1 is supported on an inner periphery of the motor support portion 125. An outer periphery of a motor shaft 20 is supported by the motor support portion 125 via the bearing B1.

A tubular wall portion 126 extending toward the differential mechanism 5 is provided on a surface of the wall portion 120 closer to the differential mechanism 5 (left side in the drawing). The tubular wall portion 126 has a cylindrical shape surrounding the opening 120a, and an inner periphery of the tubular wall portion 126 supports a bearing B2. The bearing B2 supports a tubular wall portion 61 of a differential case 50, which will be described later.

The cover member 13 includes a wall portion 130 orthogonal to the rotation axis X and a joint portion 132.

When viewed from the first case member 11, the cover member 13 is positioned on an opposite side (right side in the drawing) to the differential mechanism 5. The joint portion 132 of the cover member 13 is joined to the joint portion 112 of the first case member 11 from the rotation axis X direction. The cover member 13 and the first case member 11 are connected to each other with bolts (not illustrated). In this state, in the first case member 11, an opening of the support wall portion 111 closer to the joint portion 122 (right side in the drawing) is closed by the cover member 13.

In the cover member 13, an insertion hole 130a for the drive shaft DA is provided in a central portion of the wall portion 130.

A lip seal RS is provided on an inner periphery of the insertion hole 130a. The lip seal RS brings a lip portion (not illustrated) into elastic contact with an outer periphery of the drive shaft DA. A gap between the inner periphery of the insertion hole 130a and the outer periphery of the drive shaft DA is sealed by the lip seal RS.

A peripheral wall portion 131 surrounding the insertion hole 130a is provided on a surface of the wall portion 130 closer to the first case member 11 (left side in the drawing). The drive shaft DA is supported on an inner periphery of the peripheral wall portion 131 via a bearing B4.

A motor support portion 135 and a connection wall 136 are provided on an inner diameter side of the joint portion 132. The motor support portion 135 is provided closer to the motor 2 (left side in the drawing) when viewed from the peripheral wall portion 131. The motor support portion 135 has a tubular shape surrounding the rotation axis X with a gap therebetween.

The cylindrical connection wall 136 is connected to an outer periphery of the motor support portion 135. The connection wall 136 is formed with a larger outer diameter than the peripheral wall portion 131 in the wall portion 130 (right side in the drawing). The connection wall 136 is provided along the rotation axis X and extends away from the motor 2. The connection wall 136 connects the motor support portion 135 and the joint portion 132.

One end 20a of the motor shaft 20 penetrates an inner side of the motor support portion 135 from the motor 2 side to the peripheral wall portion 131 side.

A bearing B1 is supported on an inner periphery of the motor support portion 135. The outer periphery of the motor shaft 20 is supported by the motor support portion 135 via the bearing B1.

A lip seal RS is provided at a position adjacent to the bearing B 1.

Oil holes 136a and 136b are provided in an inner periphery of the connection wall 136. Oil OL flows from the oil hole 136a into a space (internal space Sc) surrounded by the connection wall 136. The oil OL flowing into the internal space Sc is discharged from the oil hole 136b. The lip seal RS is provided to prevent the oil OL in the connection wall 136 from flowing into the motor 2.

The gear case 14 includes a peripheral wall portion 141 and a flange-shaped joint portion 142 provided at an end portion of the peripheral wall portion 141 closer to the motor case 10. A support portion 145 for a bearing B2, which will be described later, is provided at an end portion of the peripheral wall portion 141 on a side (left side in the drawing) opposite to the joint portion 142. The peripheral wall portion 141 includes a tubular wall portion 141a connected to the joint portion 142, an inclined portion 141c (inclined surface) connected to the support portion 145, and a connection wall portion 141b connecting the tubular wall portion 141a and the inclined portion 141c. The tubular wall portion 141a and the connection wall portion 141b are gradually reduced in diameter from the joint portion 142 and connected to the inclined portion 141c. The inclined portion 141c is inclined radially inward from the connection wall portion 141b toward the support portion 145. The planetary reduction gear 4 and the differential mechanism 5, which are the power transmission mechanism 3, are accommodated inside the peripheral wall portion 141.

The gear case 14 is positioned closer to the differential mechanism 5 (left side in the drawing) when viewed from the motor case 10. The joint portion 142 of the gear case 14 is joined to the joint portion 123 of the second case member 12 of the motor case 10 from the rotation axis X direction. The gear case 14 and the second case member 12 are connected to each other with bolts (not illustrated).

A space formed inside the joined motor case 10 and gear case 14 is divided into two spaces by the wall portion 120 (cover) of the second case member 12. A side of the wall portion 120 in the motor case 10 is a motor chamber Sa that accommodates the motor 2, and a side of the the wall portion 120 in the gear case 14 is a gear chamber Sb that accommodates the power transmission mechanism 3. The wall portion 120 as the cover is sandwiched between the motor 2 and the differential mechanism 5 inside the housing HS.

The cover may have a portion accommodated in the housing HS, or the entire cover may be accommodated in the housing HS like the wall portion 120. The cover may be, for example, separate from the second case member 12. In this case, the cover may be sandwiched and fixed between the motor case 10 and the gear case 14. A part of the cover may be exposed outside of the housing HS.

The motor 2 includes the cylindrical motor shaft 20, the cylindrical rotor core 21 fitted onto the motor shaft 20, and a stator core 25 surrounding an outer periphery of the rotor core 21 with a gap therebetween.

In the motor shaft 20, the bearings B1 and B1 are fitted and fixed to both sides of the rotor core 21.

The bearing B1 positioned on the one end 20a (right side in the drawing) of the motor shaft 20 when viewed from the rotor core 21 is supported on the inner periphery of the motor support portion 135 of the cover member 13. The bearing B1 positioned on the other end 20b side (left side in the drawing) is supported on the inner periphery of the cylindrical motor support portion 125 of the second case member 12.

The motor support portions 135 and 125 are respectively disposed facing the one end portion 21a and the other end portion 21b of the rotor core 21, with a gap therebetween in the rotation axis X direction, on an inner diameter side of coil ends 253a and 253b, which will be described later.

The rotor core 21 is formed by laminating a plurality of silicon steel plates. Each of the silicon steel plates is fitted onto the motor shaft 20 such that relative rotation with respect to the motor shaft 20 is restricted.

When viewed from the rotation axis X direction of the motor shaft 20, the silicon steel plate has a ring shape. On an outer peripheral side of the silicon steel plate, N-pole and S-pole magnets (not illustrated) are alternately provided in a circumferential direction around the rotation axis X.

The stator core 25 surrounding the outer periphery of the rotor core 21 is formed by laminating a plurality of electromagnetic steel plates. The stator core 25 is fixed to an inner periphery of the cylindrical support wall portion 111 of the first case member 11.

Each of the electromagnetic steel plates includes a ring-shaped yoke portion 251 fixed to the inner periphery of the support wall portion 111, and a teeth portion 252 protruding from an inner periphery of the yoke portion 251 toward the rotor core 21.

In the present embodiment, the stator core 25 in which a winding 253 is wound around a plurality of teeth portions 252 in a distributed manner is adopted. The stator core 25 is longer than the rotor core 21 in the rotation axis X direction by lengths of the coil ends 253a and 253b protruding in the rotation axis X direction.

A stator core in which windings are concentratedly wound around each of the plurality of teeth portions 252 protruding toward the rotor core 21 may be adopted.

The opening 120a is provided in the wall portion 120 (motor support portion 125) of the second case member 12. The other end 20b side of the motor shaft 20 penetrates through the opening 120a to the differential mechanism 5 (left side in the drawing) and is positioned in the gear case 14.

The other end 20b of the motor shaft 20 faces a side gear 54A, which will be described later, inside the gear case 14 with a gap therebetween in the rotation axis X direction.

A lip seal RS is inserted between the motor shaft 20 and the opening 120a of the wall portion 120.

The oil OL for lubricating the planetary reduction gear 4 and the differential mechanism 5 is sealed in an inner diameter side of the gear case 14.

The lip seal RS is provided to prevent the oil OL in the gear case 14 from flowing into the motor case 10.

As illustrated in FIG. 4, a sun gear 41 of the planetary reduction gear 4 is spline-fitted in a region of the motor shaft 20 positioned in the gear case 14.

A tooth portion 41a is formed on an outer periphery of the sun gear 41, and a large-diameter gear portion 431 of a stepped pinion gear 43 meshes with the tooth portion 41a.

The stepped pinion gear 43 includes the large-diameter gear portion 431 (large pinion) that meshes with the sun gear 41 and a small-diameter gear portion 432 (small pinion) that has a smaller diameter than the large-diameter gear portion 431.

The large-diameter gear portion 431 and the small-diameter gear portion 432 are integrated gear components disposed side by side in a direction of an axis X1 parallel to the rotation axis X.

An outer periphery of the small-diameter gear portion 432 meshes with an inner periphery of a ring gear 42. The ring gear 42 has a ring shape surrounding the rotation axis X with a gap therebetween. On an outer periphery of the ring gear 42, engagement teeth are provided, and the engagement teeth are spline-fitted to a teeth portion 146a provided on an inner periphery of the connection wall portion 141b. Rotation of the ring gear 42 around the rotation axis X is restricted.

A pinion shaft 44 penetrates inner diameter sides of the large-diameter gear portion 431 and the small-diameter gear portion 432. The stepped pinion gear 43 is rotatably supported on an outer periphery of the pinion shaft 44 via needle bearings NB and NB.

As illustrated in FIG. 3, the differential mechanism 5 includes the differential case 50 as an input element, the drive shafts DA and DB (output shafts) as output elements, and a differential gear set as a differential element. Although detailed description is omitted, the differential case 50 may be configured by two case members assembled in a rotation axis direction.

The differential case 50 also functions as a carrier that supports the stepped pinion gear 43 of the planetary reduction gear 4. The stepped pinion gear 43 is rotatably supported by the differential case 50 via the pinion shaft 44. As illustrated in FIG. 7, three stepped pinion gears 43 are disposed at intervals in the circumferential direction around the rotation axis X.

As illustrated in FIG. 3, in the differential case 50, as the differential gear set, a pinion mate gear 52, which is a bevel gear type differential gear, and side gears 54A and 54B are provided. The pinion mate gear 52 is supported by a pinion mate shaft 51.

The pinion mate shaft 51 includes a central member 510 disposed on the rotation axis X and a shaft member 511 connected to an outer diameter side of the central member 510. Although not illustrated, a plurality of shaft members 511 are provided at equal intervals in the circumferential direction around the rotation axis X. The shaft member 511 is inserted through a support hole 69 of the differential case 50 extending in the radial direction and supported.

The pinion mate gear 52 is fitted onto each of the shaft members 511 one by one and is rotatably supported.

In the differential case 50, the side gear 54A is positioned on one side of the central member 510 in the rotation axis X direction, and the side gear 54B is positioned on the other side of the central member 510. The side gears 54A and 54B are rotatably supported by the differential case 50.

The side gear 54A meshes with the pinion mate gear 52 from one side in the rotation axis X direction. The side gear 54B meshes with the pinion mate gear 52 from the other side in the rotation axis X direction.

An opening 60 and the tubular wall portion 61 surrounding the opening 60 and extending toward the motor case 10 are provided in a central portion of one end side (right side in the drawing) of the differential case 50. An outer periphery of the tubular wall portion 61 is supported by the wall portion 120 of the second case member 12 via the bearing B2.

The drive shaft DA inserted through the opening 60 is inserted into the differential case 50 from the rotation axis X direction. The drive shaft DA penetrates the insertion hole 130a of the wall portion 130 of the cover member 13, and is provided across inner diameter sides of the motor shaft 20 of the motor 2 and the sun gear 41 of the planetary reduction gear 4 in the rotation axis X direction.

As illustrated in FIG. 3, a through hole 65 and a tubular wall portion 66 surrounding the through hole 65 are formed in a central portion of the other end side (left side in the drawing) of the differential case 50. A bearing B2 is fitted onto the tubular wall portion 66. The bearing B2 fitted onto the tubular wall portion 66 is held by the support portion 145 of the gear case 14. The tubular wall portion 66 of the differential case 50 is rotatably supported by the gear case 14 via the bearing B2.

The drive shaft DB penetrating an opening 145a of the gear case 14 is inserted into the support portion 145 from the rotation axis X direction. The drive shaft DB is rotatably supported by the support portion 145. The tubular wall portion 66 functions as a shaft support portion that supports an outer periphery of the drive shaft DB.

A lip seal RS is fixed to an inner periphery of the opening 145a. A lip portion (not illustrated) of the lip seal RS comes into elastic contact with an outer periphery of the tubular wall portion 540 of the side gear 54B that is fitted onto the drive shaft DB.

As a result, a gap between the outer periphery of the tubular wall portion 540 of the side gear 54B and the inner periphery of the opening 145a is sealed.

Inside the differential case 50, distal end portions of the drive shafts DA and DB face each other with a gap therebetween in the rotation axis X direction.

The side gears 54A and 54B supported by the differential case 50 are spline-fitted to outer peripheries of the distal end portions of the drive shafts DA and DB. The side gears 54A and 54B and the drive shafts DA and DB are connected to each other so as to be integrally rotatable around the rotation axis X.

In this state, the side gears 54A and 54B are disposed facing each other with a gap therebetween in the rotation axis X direction. The central member 510 of the pinion mate shaft 51 is positioned between the side gears 54A and 54B.

The pinion mate gear 52 is assembled to the side gear 54A positioned on one side in the rotation axis X direction and the side gear 54B positioned on the other side in a state in which teeth portions thereof are meshed with each other.

As illustrated in FIG. 4, a support hole 62 at one end 44a of the pinion shaft 44 is formed on an outer diameter side of the opening 60 on the one end side (right side in the drawing) of the differential case 50. A support hole 68 at the other end 44b of the pinion shaft 44 is formed on the other end side (left side in the drawing) of the differential case 50.

The support holes 62 and 68 are formed at overlapping positions in the rotation axis X direction. The support holes 62 and 68 are formed at intervals in the circumferential direction around the rotation axis X according to a position where the stepped pinion gear 43 is disposed. The one end 44a of the pinion shaft 44 is inserted into the support hole 62, and the other end 44b is inserted into the support hole 68. The other end 44b of the pinion shaft 44 is press-fitted into the support hole 68, so that the pinion shaft 44 is fixed to the differential case 50 so as not to be rotatable relative to the differential case 50. The stepped pinion gear 43 fitted onto the pinion shaft 44 is rotatably supported around the axis X1 parallel to the rotation axis X.

Although not illustrated, the oil OL for lubrication is stored inside the gear case 14. When the differential case 50 rotates around the rotation axis X, the oil OL is scraped up by the differential case 50.

Although detailed description is omitted, an oil passage, an oil hole, and the like for introducing the oil OL scraped up by the differential case 50 are provided in the differential case 50, the pinion shaft 44, and the like. As a result, the oil OL is easily introduced into rotating members such as the bearing B2 and the needle bearing NB.

As illustrated in FIG. 7, a catch tank 15 is provided above the differential case 50 inside the gear case 14. The catch tank 15 is positioned on one side (left side in the drawing) of a vertical line VL orthogonal to the rotation axis X. The catch tank 15 and an accommodation portion 140 of the differential case 50 communicate with each other via a communication port 147. A part of the oil OL scraped up by the differential case 50 and scattered flows into the catch tank 15 from the communication port 147 and is collected.

When the vehicle equipped with the unit 1 travels forward, the differential case 50 rotates in a counterclockwise direction CCW around the rotation axis X when viewed from the motor case 10. As illustrated in FIG. 4, the small-diameter gear portion 432 of the stepped pinion gear 43 meshes with the ring gear 42 fixed to an inner periphery of the gear case 14. Therefore, as illustrated in FIG. 7, the large-diameter gear portion 431 of the stepped pinion gear 43 revolves around the rotation axis X in the counterclockwise direction CCW while rotating around the axis X1 in a clockwise direction.

The catch tank 15 is positioned on a left side of the vertical line VL, that is, on a downstream side in a rotation direction of the differential case 50. As a result, most of the oil OL scraped up by the differential case 50 rotating around the rotation axis X can flow into the catch tank 15.

As illustrated in FIG. 3, the catch tank 15 is connected to a space Rx between the lip seal RS and the bearing B2 via an oil passage 151a. The catch tank 15 is connected to an oil cooler 83 (see FIG. 6) via an oil passage, a pipe, or the like (not illustrated). The oil cooler 83 is connected to the oil hole 136a (see FIG. 3) formed in the connection wall 136 via a pipe, an oil passage, or the like (not illustrated).

An oil hole Ha is formed in the peripheral wall portion 141 of the gear case 14. The oil hole Ha is connected to the oil hole 136b formed in the internal space Sc via a pipe (not illustrated). The oil OL discharged from the internal space Sc through the oil hole 136b is supplied again into the gear chamber Sb through the oil hole Ha.

As illustrated in FIG. 6, the unit 1 is provided with a circulation system 80 for the cooling water CL. The circulation system 80 circulates the cooling water CL between the cooling path CP 1 of the motor case 10 and the cooling path CP2 of the inverter case 17. The circulation system 80 further includes the oil cooler 83, a water pump WP, and a radiator 82 between the cooling path CP1 and the cooling path CP2, which are connected by pipes or the like through which the cooling water CL flows.

The water pump WP pumps the cooling water CL in the circulation system 80.

The radiator 82 is a device that dissipates heat of the cooling water CL to cool the cooling water CL.

The oil cooler 83 is a heat exchanger that exchanges heat between the cooling water CL and the oil OL. The oil OL collected by the catch tank 15 provided in the gear chamber Sb of the gear case 14 is introduced into the oil cooler 83. The oil OL is cooled by heat exchange with the cooling water CL. The cooled oil OL is supplied from the oil hole 136a of the motor case 10 to the internal space Sc. The oil OL supplied to the oil cooler 83 is not limited to the oil OL collected by the catch tank 15, and may be supplied from another oil passage appropriately provided in the housing HS. The oil OL discharged from the oil cooler 83 may be supplied to a location other than the internal space Sc.

The cooling water CL is supplied to the oil cooler 83 after flowing through the cooling path CP2 in the inverter case 17 and the cooling path CP1 in the motor case 10. After the heat exchange with the oil OL in the oil cooler 83, the cooling water CL is cooled by the radiator 82 and supplied to the cooling path CP2 of the inverter case 17 again.

Functions of the unit 1 having such a configuration will be described.

As illustrated in FIG. 1, in the unit 1, the planetary reduction gear 4, the differential mechanism 5, and the drive shafts DA and DB are provided along the transmission path of the output rotation of the motor 2.

As illustrated in FIG. 3, when the motor 2 is driven and the rotor core 21 rotates around the rotation axis X, the rotation is input to the sun gear 41 of the planetary reduction gear 4 via the motor shaft 20 that rotates integrally with the rotor core 21.

In the planetary reduction gear 4, the sun gear 41 serves as an input portion for the output rotation of the motor 2, and the differential case 50 supporting the stepped pinion gear 43 serves as an output portion for the input rotation.

As illustrated in FIG. 4, when the sun gear 41 rotates around the rotation axis X by the input rotation, the stepped pinion gear 43 (large-diameter gear portion 431 and small-diameter gear portion 432) rotates around the axis X1 by the rotation input from the sun gear 41.

Here, the small-diameter gear portion 432 of the stepped pinion gear 43 meshes with the ring gear 42 fixed to the inner periphery of the gear case 14. Therefore, the stepped pinion gear 43 revolves around the rotation axis X while rotating around the axis X1.

Here, in the stepped pinion gear 43, an outer diameter of the small-diameter gear portion 432 is smaller than an outer diameter of the large-diameter gear portion 431.

As a result, the differential case 50 supporting the stepped pinion gear 43 rotates around the rotation axis X at a rotation speed lower than that of the rotation input from the motor 2.

Therefore, the rotation input to the sun gear 41 of the planetary reduction gear 4 is greatly decelerated by the stepped pinion gear 43 and then output to the differential case 50 (differential mechanism 5).

As illustrated in FIG. 3, when the differential case 50 rotates around the rotation axis X by the input rotation, the drive shafts DA and DB meshing with the pinion mate gear 52 rotate around the rotation axis X in the differential case 50. As a result, the left and right drive wheels K and K (see FIG. 1) of the vehicle equipped with the unit 1 are rotated by the transmitted rotational driving force.

As illustrated in FIG. 3, the oil OL for lubrication and cooling is stored in the gear chamber Sb. In the gear chamber Sb, when the output rotation of the motor 2 is transmitted, the stored oil OL is scraped up by the differential case 50 rotating around the rotation axis X.

As illustrated in FIG. 3 and FIG. 4, the scraped up oil OL lubricates a meshing portion between the sun gear 41 and the large-diameter gear portion 431, a meshing portion between the small-diameter gear portion 432 and the ring gear 42, and meshing portions between the pinion mate gear 52 and the side gears 54A and 54B. The heat exchange with the oil OL cools these meshing portions.

As illustrated in FIG. 7, the differential case 50 rotates around the rotation axis X in the counterclockwise direction CCW.

The catch tank 15 is provided on an upper portion of the gear case 14. The catch tank 15 is positioned on the downstream side in the rotation direction of the differential case 50, and a part of the oil OL scraped up by the differential case 50 flows into the catch tank 15.

As illustrated in FIG. 3, a part of the oil OL flowing into the catch tank 15 is supplied to the space Rx between the lip seal RS and the bearing B2 via the oil passage 151a to lubricate the bearing B2. A part of the oil OL flowing into the catch tank 15 is introduced into an oil cooler 83 (see FIG. 6) via a pipe (not illustrated) and cooled. The cooled oil OL is supplied to the internal space Sc (see FIG. 3) formed in the connection wall 136 through the oil hole 136a. The oil OL supplied to the internal space Sc lubricates the bearing B4 and is discharged from the oil hole 136b. The oil OL discharged from the oil hole 136b is supplied into the gear chamber Sb from the oil hole Ha via a pipe or the like (not illustrated).

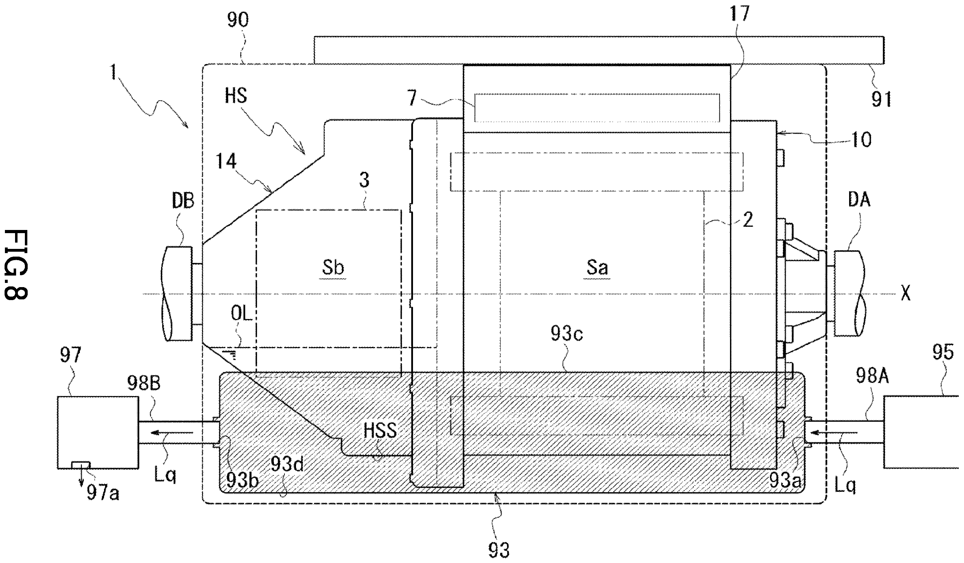

FIG. 8 is a diagram illustrating a covering 90 for covering the housing HS and a box 93 for introducing a liquid Lq.

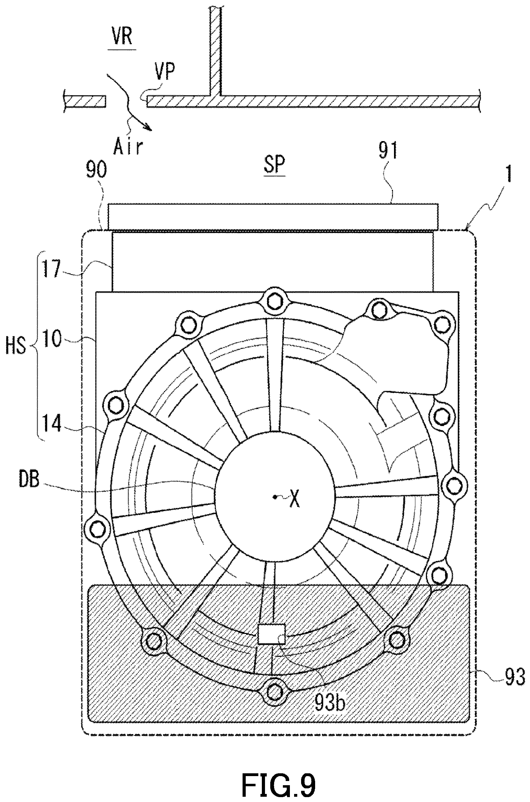

FIG. 9 is a view of FIG. 8 when viewed from the rotation axis X direction. In FIG. 8 and FIG. 9, the covering 90 is indicated by a broken line for easy understanding.

As illustrated in FIG. 8, as a noise countermeasure the housing HS can be covered with the covering 90 which is a separate component. The noise countermeasure means, for example, a countermeasure for reducing noise that is generated in various components (for example, power transmission mechanism 3 and motor 2) of the unit 1 and leaks to the outside. The noise is sound or electromagnetic noise.

The covering 90 may have a rectangular parallelepiped shape that accommodates the entire housing HS as in the illustrated example, but is not limited thereto. The covering 90 is made of, for example, a flexible material and can be wound around a surface of the housing HS without a gap. Further, the covering 90 may cover only the gear case 14 of the housing HS. Alternatively, the gear case 14 and the motor case 10 may be covered with the covering 90, and the inverter case 17 may be exposed from the covering 90.

The covering 90 can be made of a material having a noise reduction function (for example, soundproof function, sound absorption function, and sound insulation function). The material applicable to the covering 90 includes, for example, organic materials, and metal materials. A material containing an organic material is preferable to enhance a sound reduction effect. A material containing a metal material is preferable to enhance an effect of reducing the electromagnetic noise.

Among the organic materials, for example, urethane, rubber, and polyethylene have a good sound reduction effect and are particularly preferred materials.

Among the metal materials, particularly preferred materials are materials having higher specific conductivity/specific permeability and/or materials having higher specific conductivity × specific permeability than materials constituting the housing HS because the effect of reducing the electromagnetic noise is further enhanced. For example, when the material of the housing HS member is a material containing aluminum as a main component, the metal material applied to the covering 90 is preferably a material containing gold, silver, and copper.

The covering 90 may be formed by laminating different materials and/or mixing different materials. For example, when the covering 90 is formed by laminating a metal material and an organic material, or when the covering 90 is made of a material in which particles (metal particles, alloy particles, or the like) containing a metal are mixed with an organic material, the covering 90 is preferable as a countermeasure against sound and electromagnetic noise.

In order to enhance the sound reduction effect, the covering 90 may have a porous structure.

In covering the housing HS with the covering 90, a material having a waterproof effect can be used to improve durability. The metal material has a waterproof effect. Examples of organic materials having a waterproof effect include rubber and polyethylene.

As illustrated in FIG. 8, as an electrical component, a drive battery 91 of the motor 2 is attached to an outside of the covering 90. The drive battery 91 is connected to the inverter 7 via wiring (not illustrated). The drive battery 91 is fixed to an upper portion of the housing HS from the outside of the covering 90. When viewed in the radial direction of the rotation axis X, a part of the drive battery 91 is set off from the covering 90.

The electrical component is not limited to the drive battery 91, and may be, for example, a connector or a park actuator. When the inverter case 17 is not covered with the covering 90, the inverter 7 may be used as the electrical component.

As illustrated in FIG. 9, the vehicle is provided with a ventilation port VP that communicates a space SP below the vehicle in which the unit 1 is disposed with an inside of a vehicle room VR in which an occupant gets on.

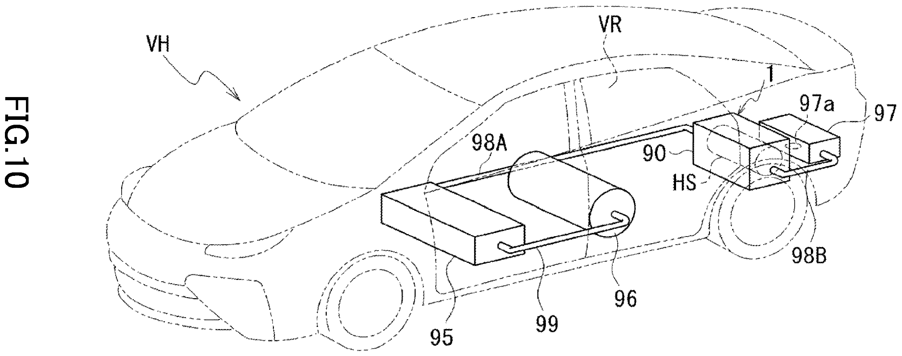

FIG. 10 is a diagram illustrating a vehicle VH equipped with the unit 1 and a fuel cell 95.

As illustrated in FIG. 10, the unit 1 is disposed rear of vehicle VH, and the fuel cell 95 is disposed in front of the vehicle VH. A hydrogen tank 96 is disposed below the vehicle room VR at a center of the vehicle VH. The hydrogen tank 96 is connected to the fuel cell 95 via a pipe 99.

A water storage tank 97 is disposed rear of the unit 1 in the vehicle VH. A drainage port 97a is provided in a lower portion of the water storage tank 97.

The fuel cell 95 and the unit 1 are connected via a drainage pipe 98A. The unit 1 and the water storage tank 97 are connected via a drainage pipe 98B. That is, the fuel cell 95 and the water storage tank 97 are connected via the drainage pipe 98A, the unit 1, and the drainage pipe 98B.

The fuel cell 95 is also electrically connected to the unit 1 via wiring (not illustrated).

In the vehicle VH, power is supplied from the drive battery 91 (see FIG. 8) to the motor 2. When the drive battery 91 is charged, or when power supplied from the drive battery 91 to the motor 2 is insufficient, power is supplied from the fuel cell 95.

As illustrated in FIG. 10, hydrogen gas is supplied from the hydrogen tank 96 to an anode of the fuel cell 95, and oxygen gas (air) taken in from outside air is supplied to a cathode of the fuel cell 95, and an electrochemical reaction is caused to generate electricity. As a result of the electrochemical reaction between the hydrogen gas and the oxygen gas, the liquid Lq (water: H₂O) is generated.

The generated liquid Lq is introduced into the water storage tank 97 at the rear of the vehicle VH via the drainage pipes 98A and 98B, and is discharged to an outside of the vehicle from the drainage port 97a of the water storage tank 97. Exhaust gas (mainly nitrogen gas) generated by the electrochemical reaction may be introduced into the drainage pipes 98A and 98B.

As described above, the drainage pipes 98A and 98B are each connected to the unit 1. That is, the liquid Lq is introduced into the water storage tank 97 via the unit 1. In the embodiment, the liquid Lq is used as a countermeasure against heat for the unit 1.

As illustrated in FIG. 8, in the unit 1, heat is likely to be generated in the housing HS due to rotation of components constituting the motor 2 and the power transmission mechanism 3. As illustrated in FIG. 8, since the housing HS is covered with the covering 90, the generated heat is likely to be accumulated. In the embodiment, a temperature rise of the housing HS is reduced by exchanging heat between the housing HS and the liquid Lq which is a coolant (refrigerant).

For heat exchange, for example, the liquid Lq is interposed between an outer surface of the covering 90 and an outer surface of the housing HS. As a method of interposing the liquid Lq between the outer surface of the covering 90 and the outer surface of the housing HS, for example, a retention portion for retaining the liquid Lq can be provided between the outer surface of the covering 90 and the outer surface of the housing HS. Further, a flow path through which the liquid Lq flows can be provided between the outer surface of the covering 90 and the outer surface of the housing HS.

Here, "between the outer surface of the covering 90 and the outer surface of the housing HS" includes a concept of "between the outer surface of the covering 90 and an inner surface of the covering 90", and includes, for example, a configuration in which a retention portion or a flow path is formed in the covering 90.

Further, "between the outer surface of the covering 90 and the outer surface of the housing HS" includes a concept of "between the inner surface of the covering 90 and the outer surface of the housing HS". This concept includes, for example, a configuration in which a clearance between the covering 90 and the housing HS is a retention portion or a flow path. This concept also includes a configuration in which a retention portion (such as the box 93 into which the liquid Lq is introduced) or a flow path (such as a pipe through which the liquid Lq flows) is provided between the covering 90 and the housing HS, or the like.

As illustrated in FIG. 8, in the embodiment, the box 93 is provided between the inner surface of the covering 90 and the outer surface of the housing HS as a retention portion into which liquid Lq is introduced. In FIG. 8 and FIG. 9, the box 93 is illustrated with hatching for easy understanding.

As illustrated in FIG. 8, the box 93 is installed in a lower portion of the housing HS in the covering 90. When viewed in the radial direction of the rotation axis X, the box 93 has a portion that overlaps the gear case 14 in which the power transmission mechanism 3 is accommodated and the motor case 10 in which the motor 2 is accommodated.

An introduction port 93a for the liquid Lq is provided at one end (right side in the drawing) of the box 93 in the rotation axis X direction, and a discharge port 93b is provided at the other end (left side in the drawing) of the box 93. The drainage pipe 98A extending from the fuel cell 95 penetrates the covering 90 and is connected to the introduction port 93a of the box 93. The drainage pipe 98B extending from the water storage tank 97 penetrates the covering 90 and is connected to the discharge port 93b of the box 93. The introduction port 93a and the discharge port 93b are provided apart from a bottom surface 93d of the box 93.

The liquid Lq flowing through the drainage pipe 98A is introduced into the box 93 through the introduction port 93a. When the liquid Lq retaining in the box 93 reaches a height of the discharge port 93b, the liquid Lq is discharged to the drainage pipe 98B through the discharge port 93b.

The heat exchange between the liquid Lq retaining in the box 93 and the housing HS reduces the temperature rise of the housing HS. Since the covering 90 includes the box 93, the covering 90 functions as a heat exchange unit with the housing HS.

The liquid Lq retaining in the box 93 has a portion that overlaps the power transmission mechanism 3 when viewed in the radial direction of the rotation axis X. As illustrated in FIG. 8, the oil OL is stored in a lower portion of a gear chamber Sb formed in the gear case 14 of the housing HS. A temperature of the oil OL stored in the gear chamber Sb is likely to rise due to heat exchange with the meshing portions of the respective gears constituting the power transmission mechanism 3. Since the box 93 is positioned below the gear chamber Sb in a gravity direction, heat is easily exchanged with the oil OL stored in the gear chamber Sb. This reduces a temperature rise of the oil OL stored in the gear chamber Sb, thereby contributing to a countermeasure against heat for the housing HS.

The liquid Lq retaining in the box 93 has a portion that overlaps the motor 2 when viewed in the radial direction of the rotation axis X. FIG. 8 illustrates an example in which the oil OL is stored in the gear chamber Sb. When the motor 2 is directly cooled by the oil OL, the oil OL can also be stored in the motor chamber Sa that accommodates the motor 2. In this case, the temperature rise of the oil OL scraped up by the motor 2 can be reduced by heat exchange with the liquid Lq accumulated in the box.

Further, since the liquid Lq is interposed between the outer surface of the covering 90 and the outer surface of the housing HS, external leakage of noise generated from the power transmission device and the motor 2 is reduced.

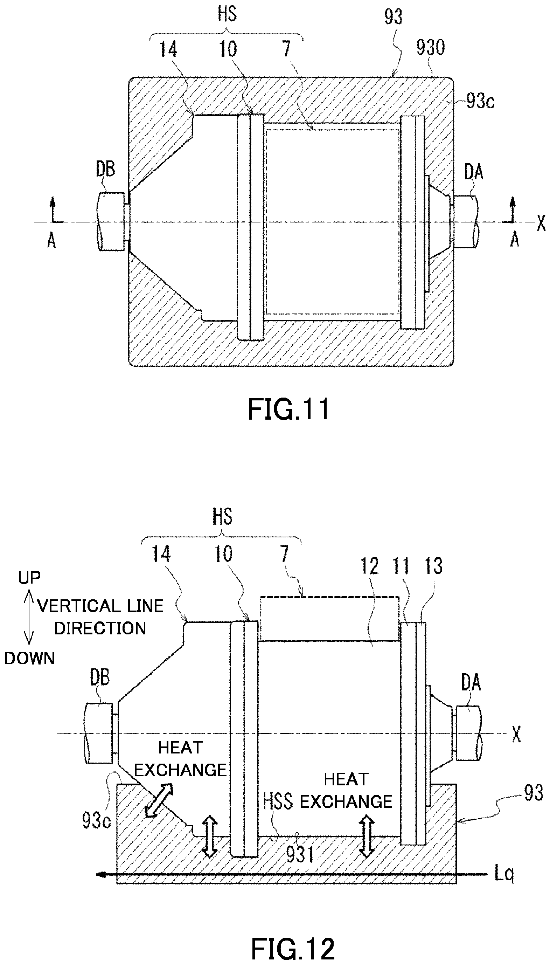

FIG. 11 is a view illustrating a state in which the box 93 is viewed from above together with the housing HS. FIG. 12 is a view illustrating a cross section of the box 93 taken along line A-A in FIG. 11 together with the housing HS. In FIG. 11, an upper outer surface 93c of the box 93 is illustrated with hatching to facilitate understanding of an area of the box 93.

As illustrated in FIG. 11, the box 93 has a substantially rectangular shape when viewed from above. The box 93 is formed in such a size that the housing HS is disposed inside an outer peripheral edge 930 of the box 93.

As illustrated in FIG. 12, the box 93 has a rectangular parallelepiped shape having a thickness in a vertical line direction. As illustrated in FIG. 12, a recess 931 is provided in the upper outer surface 93c of the box 93. The recess 931 opens upward in the vertical line direction. An inner periphery of the recess 931 is formed according to a shape of a lower outer surface HSS of the housing HS. The lower outer surface HSS of the housing HS is disposed in the recess 931. In the recess 931, the upper outer surface 93c and the lower outer surface HSS are in contact with each other. Accordingly, heat exchange efficiency between the liquid Lq in the box 93 and the housing HS can be improved.

The illustrated box 93 is merely an example. The box 93 may have a rectangular parallelepiped shape in which the recess 931 is not formed, or may have a tubular shape. Further, a plurality of boxes 93 may be provided so as to surround the housing HS.

When the liquid Lq in the box 93 reaches the height of the discharge port 93b, the liquid Lq is discharged from the discharge port 93b, and a new liquid Lq is introduced from the introduction port 93a. As described above, since the liquid Lq in the box 93 is normally replaced, heat exchange with the housing HS can be efficiently performed.

As illustrated in FIG. 10, the unit 1 and the water storage tank 97 are positioned on a rear side of the vehicle VH with respect to the fuel cell 95 in which the liquid Lq is generated. That is, the housing HS of the unit 1 and the drainage port 97a of the water storage tank 97 are disposed close to each other. Accordingly, the drainage pipe 98B that connects the housing HS of the unit 1 and the drainage port 97a of the water storage tank 97 can be shortened. This is advantageous in cost, weight, and the like.

When the liquid Lq is discharged from the discharge port 93b of the box 93 of the housing HS and the drainage port 97a of the water storage tank 97, a drainage sound may be generated. As illustrated in FIG. 10, the housing HS of the unit 1 and the water storage tank 97 are disposed rear of the vehicle room VR in the vehicle VH. Accordingly, the sound generated from the housing HS and the drainage sound of the liquid Lq hardly reach the vehicle room VR, which is advantageous for noise countermeasures.

The drainage port 97a of the water storage tank 97 is disposed rear of the housing HS in the vehicle VH. For example, when viewed in the gravity direction, the housing HS has a portion positioned between the drainage port 97a of the water storage tank 97 and the vehicle room VR. With such a configuration, the housing HS functions as a wall that cuts off discharge noise, which is noise generated from the water storage tank 97, and thus is advantageous for noise countermeasures.

The temperature rise of the unit 1 disposed below the vehicle VH is reduced by performing heat exchange with traveling wind of the vehicle VH, but when the unit 1 is disposed on the rear side of the vehicle VH, the unit 1 is less likely to be affected by the traveling wind of the vehicle. As illustrated in FIG. 9, in the embodiment, the ventilation port VP that communicates the inside of the vehicle room VR with the space SP in which the housing HS is disposed is provided.

By driving an air conditioner in the vehicle room VR or opening windows of the vehicle room VR, the air Air in the vehicle room VR is discharged from the ventilation port VP and flows into the space SP. A temperature of the air Air in the vehicle room VR is adjusted according to an outside air temperature. For example, when the outside air temperature is high, cooling is used in the vehicle VH, or the windows are opened. Further, for example, when the outside air temperature is low, heating is used.

By flowing the air Air whose temperature is adjusted according to the outside air temperature into the space SP and exchanging heat with the housing HS, heat exchange can be performed in a direction that brings the temperature of the housing HS closer to an appropriate temperature even on the rear side of the vehicle, which is less likely to be affected by the traveling wind. A fan or the like may be provided so that the air Air in the vehicle room VR can easily flow into the space SP.

As described above, the vehicle VH according to the embodiment has the following configurations.
(1) The vehicle VH includes: a housing HS that accommodates the power transmission mechanism 3;
   the covering 90 having a portion that covers the housing HS; and
   the liquid Lq interposed between the outer surface of the covering 90 and the outer surface of the housing HS.

With this configuration, the liquid Lq can be effectively used. Noise is generated by an operation of the power transmission mechanism 3 accommodated in the housing HS. By covering the housing HS that accommodates the power transmission mechanism 3 with the covering 90, a countermeasure against noise can be taken. However, since the housing HS is covered with the covering 90, heat is likely to be accumulated. By interposing the liquid Lq between the outer surface of the covering 90 and the outer surface of the housing HS, the housing HS can be cooled by the liquid Lq. Further, the liquid Lq also contributes to a countermeasure against noise leaking to an outside of the housing HS. In this way, the liquid Lq can be effectively used as a countermeasure against heat or noise in the vehicle VH.

(2) The liquid Lq is drainage of the fuel cell 95.

The liquid Lq (water) is generated by power generation in the fuel cell 95. By interposing the liquid Lq discharged from the water storage tank 97 to the outside of the vehicle between the outer surface of the covering 90 and the outer surface of the housing HS, the drainage of the fuel cell 95 can be effectively used.

(3) The vehicle VH includes: the housing HS that accommodates the power transmission mechanism 3; and
the covering 90 (heat exchange unit) that performs heat exchange between the housing HS and the liquid Lq that is drainage of the fuel cell 95.

The liquid Lq discharged from the water storage tank 97 to the outside of the vehicle is introduced into the box 93 of the covering 90, and heat exchange with the housing HS is performed, and thus the drainage of the fuel cell 95 can be effectively used.

(4, 5) The vehicle VH includes: the drive battery 91 (electrical component) fixed to the outer surface of the housing HS.

When viewed in the radial direction of the rotation axis X, the drive battery 91 has a portion offset from the covering 90.

The electrical component (for example, park actuator or connector) is exposed to an outside of the covering 90 and fixed to the housing HS covered with the covering 90.

Accordingly, as in the example in FIG. 8, when the liquid Lq is interposed between the inner surface of the covering 90 and the outer surface of the housing HS, a contact area between the electrical component and the liquid Lq introduced into the covering 90 can be reduced. Accordingly, interference of the liquid Lq with the electrical component can be reduced.

When the liquid Lq is interposed between the inner surface of the covering 90 and the outer surface of the covering 90, the outer surfaces of the covering 90 and the housing HS can be brought close to each other. Accordingly, the heat exchange efficiency between the liquid Lq and the housing HS can be improved, which contributes to a countermeasure against heat for the housing HS. Further, when the electrical component is also covered with the covering 90, a gap generated by the covering 90 being separated from the surface of the housing HS is reduced, and thus a noise countermeasure effect can be improved.

(6) The housing HS is positioned on the vehicle VH rear side of the vehicle room VR.

The vehicle VH includes the ventilation port VP that communicates with the space SP in which the housing HS is disposed, in the vehicle room VR.

By providing the ventilation port VP that communicates the inside of the vehicle room VR with the space SP in which the housing HS is disposed, the air Air in the vehicle room VR can be sent to the space SP. Accordingly, since the air Air in the vehicle room VR whose temperature is adjusted according to the outside air temperature is introduced into the space SP, heat exchange can be performed in a direction approaching an appropriate temperature of the housing HS even on the rear side of the vehicle VH, which is less likely to be affected by the traveling wind.

### (Modification 1)

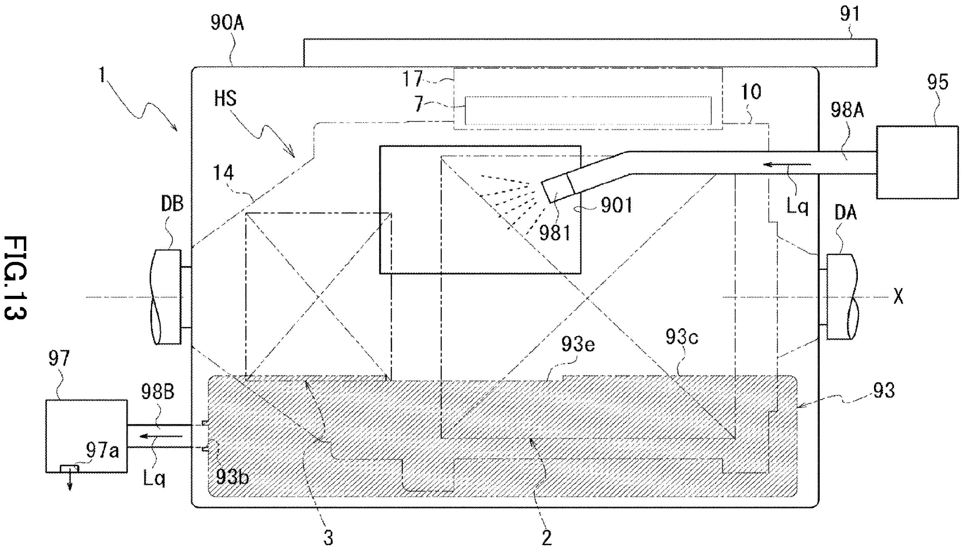

FIG. 13 is a schematic diagram illustrating a covering 90A according to Modification 1.

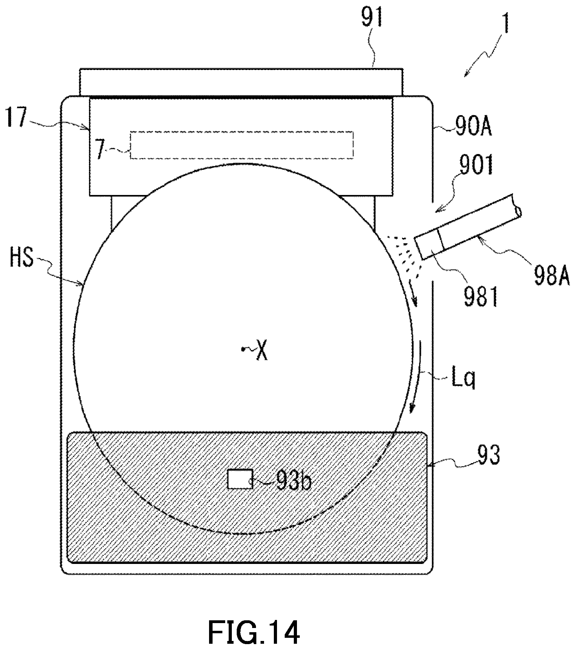

FIG. 14 is a schematic diagram of the covering 90A according to Modification 1 when viewed from a rotation axis X direction.

As illustrated in FIG. 13 and FIG. 14, in Modification 1, the covering 90A is provided with an opening 901 that exposes the outer surface of the housing HS.

As illustrated in FIG. 13, a nozzle 981 for injecting the liquid Lq is attached to a tip of the drainage pipe 98A through which the liquid Lq discharged from the fuel cell 95 flows. The nozzle 981 may inject the liquid Lq as a water flow, or may inject the liquid Lq as a mist.

By introducing the exhaust gas (mainly nitrogen gas) generated by the electrochemical reaction of the fuel cell 95 into the drainage pipe 98A, the liquid Lq can be injected from the nozzle 981.

As illustrated in FIG. 14, the nozzle 981 is disposed facing the outer surface of the housing HS exposed from the opening 901 formed in the covering 90A. The liquid Lq injected from the nozzle 981 is sprayed onto the outer surface of the housing HS. When the liquid Lq sprayed onto the outer surface of the housing HS is vaporized, heat of the outer surface of the housing HS is absorbed, thereby contributing to a countermeasure against heat for the housing HS.

A part of the liquid Lq sprayed onto the outer surface of the housing HS does not vaporize, and falls downward along the outer surface of the housing HS according to gravity in the gravity direction.

Also in Modification 1, the box 93 is provided as a retention portion of the liquid Lq in the lower portion of the housing HS. As illustrated in FIG. 13, in the box 93 in Modification 1, an opening 93e is provided in the upper outer surface 93c instead of the introduction port 93a (see FIG. 8). The liquid Lq falling downward along the outer surface of the housing HS falls into the box 93 through the opening 93e and retains therein. The liquid Lq retaining in the box 93 contributes to a countermeasure against heat by performing heat exchange with the housing HS as in the embodiment.

The liquid Lq retaining in the box 93 is introduced from the discharge port 93b into the drainage pipe 98B as in the embodiment.

According to the configuration in Modification 1, the opening 901 is provided in the covering 90A to expose the outer surface of the housing HS. The nozzle 981 is provided at the tip of the drainage pipe 98A through which the liquid Lq discharged from the fuel cell 95 flows, and the nozzle 981 is disposed at the opening 901. By injecting the liquid Lq from the nozzle 981 to the outer surface of the housing HS, the housing HS can be efficiently cooled by vaporization heat.

A place where the opening 901 is provided is not limited, and may be, for example, a place where heat is likely to be generated in the upper portion of the housing HS. By providing the opening 901 in the upper portion of the housing HS, the upper portion of the housing HS can be cooled with a lower flow rate of liquid Lq compared to a case in which the retention portion of the liquid Lq is provided up to the upper portion of the housing HS.

For example, when the opening 901 is provided in a region of the covering 90A facing the motor case 10, the liquid Lq sprayed onto the motor case 10 can contribute to a countermeasure against heat for the motor 2. Further, for example, when the opening 901 is provided in a region of the covering 90A facing the gear case 14, the liquid Lq sprayed onto the gear case 14 can contribute to a countermeasure against heat for the power transmission mechanism 3.

In particular, in Modification 1, spraying of the liquid Lq from the opening 901 onto the outer surface of the housing HS and the box 93 capable of storing the liquid Lq falling downward along the outer surface of the housing HS are combined. Accordingly, the liquid Lq can be effectively used as a countermeasure against heat for the housing HS.

### (Modification 2)

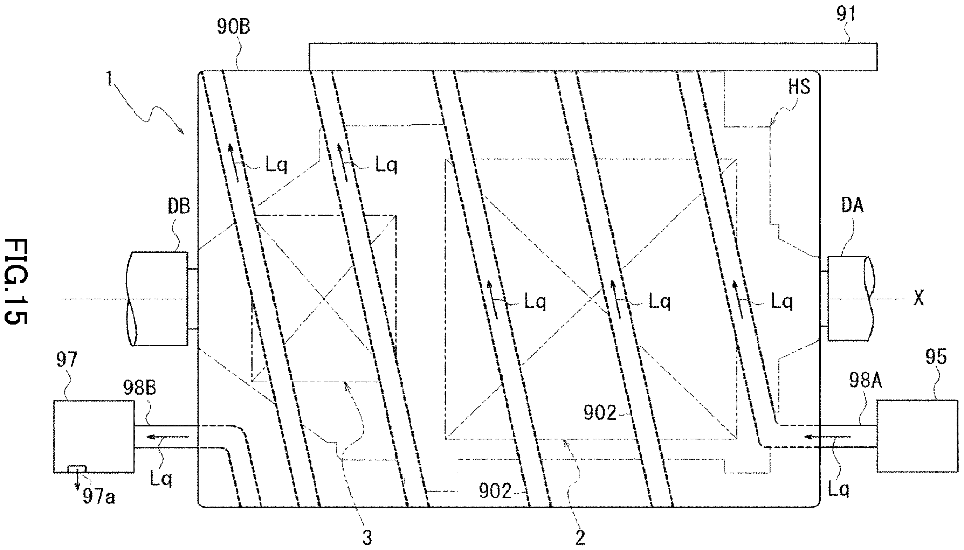

FIG. 15 is a diagram illustrating a covering 90B according to Modification 2.

As illustrated in FIG. 15, in Modification 2, a flow path 902 through which the liquid Lq flows is provided in the covering 90B. The flow path 902 can be provided, for example, between an outer surface and an inner surface of the covering 90B.

As an example, the flow path 902 may be configured by a tubular member provided integrally with the covering 90B. The tubular member preferably has flexibility to such an extent that a space inside a tube is not completely crushed even when the tubular member is bent along an outer periphery of the housing HS.

The flow path 902 is connected to the drainage pipe 98A at one end (right side in the drawing) in the rotation axis X direction of the covering 90B, and is connected to the drainage pipe 98B at the other end (left side in the drawing).

The flow path 902 is formed as one flow path that continues from a connection portion with the drainage pipe 98A to a connection portion with the drainage pipe 98B.

In a state in which the covering 90B covers a periphery of the housing HS, the flow path 902 extends along the circumferential direction around the rotation axis X, and is provided with a phase shift in the rotation axis X direction. Therefore, the flow path 902 is arranged in a spiral shape surrounding the rotation axis X.

As in the embodiment, also in Modification 2, since heat exchange is performed between the liquid Lq flowing through the flow path 902 and the housing HS, the covering 90 functions as a heat exchange unit and contributes to a countermeasure against heat for the housing HS.

Further, as compared with a case in which the retention portion of the liquid Lq is provided in the entire housing HS, the spiral flow path 902 can surround almost the entire housing HS, so that a countermeasure against heat can be taken with a small flow rate of the liquid Lq. This contributes to reducing an amount of liquid Lq required for the entire vehicle VH.

In FIG. 15, the covering 90B is illustrated as a rectangular parallelepiped shape, but is not limited thereto. For example, in order to facilitate heat exchange between the flow path 902 and the housing HS, the covering 90B may have a shape along the outer surface of the housing HS. Accordingly, an area in which the covering 90 contacts the outer surface of the housing HS is increased, and the heat exchange efficiency can be improved.

### (Other Modifications)

In the embodiment and the modifications described above, the example in which the retention portion into which the liquid Lq is introduced or the flow path is provided in the covering 90 has been described, but the present invention is not limited thereto. A heat exchanger (oil cooler) into which the liquid Lq that is the drainage of the fuel cell 95 and the oil are introduced can be used as a heat exchange unit.

The oil OL may be used to lubricate and cool the power transmission mechanism 3 or the motor 2 in the housing HS. For example, in the oil cooler 83 illustrated in FIG. 6, the liquid Lq which is the drainage of the fuel cell 95 may be introduced instead of the cooling water. Alternatively, an oil cooler different from the oil cooler 83 may be provided.

In Modification 2, the example in which the flow path 902 is formed between the outer surface of the covering 90 and the inner surface of the covering 90 has been described, but the present invention is not limited thereto. The flow path may be a flow path formed by using a part of the housing HS. For example, a flow path through which the liquid Lq flows may be formed between the outer surface and the inner surface of the housing HS.

A pipe that contacts an oil reservoir in the housing HS may be provided in the covering 90. For example, a pipe through which the liquid Lq, which is the drainage of the fuel cell 95, flows may be disposed so as to pass the oil stored in the lower portion of the gear chamber Sb of the housing HS.

Further, the inverter 7 may be provided adjacent to the housing HS, and a flow path through which the liquid Lq flows may be provided between the housing HS and the inverter 7 as a heat exchange unit. This contributes to a countermeasure against heat generated in the inverter 7.

The drive battery 91 may be provided adjacent to the housing HS, and a flow path through which the liquid Lq flows may be provided between the housing HS and the drive battery 91 as a heat exchange unit. This contributes to a countermeasure against heat generated in the drive battery 91.

Further, a flow path or a heat exchanger (oil cooler) may be provided as a heat exchange unit between the housing HS and the covering 90 or in a dead space in the housing HS.

In the embodiment and the modifications, the example in which the heat exchange between the housing HS and the liquid Lq is performed as a countermeasure against heat for the housing HS has been described, but the present invention is not limited thereto.

As a countermeasure against heat, for example, it is conceivable to reduce an amount of heat exchange between the housing HS and other components.

As a measure to reduce the amount of heat exchange, for example, the amount of heat exchange between the housing HS and an element outside the housing HS can be reduced. Further, for example, the amount of heat exchange between the housing HS and an external heat source having a higher temperature than the housing HS can be reduced. Further, for example, it is conceivable to take a measure such as reducing the amount of heat exchange between the housing HS and an external component required to be lower in temperature than the unit 1 including the housing HS.

In an embodiment of the present invention, the housing HS that accommodates at least the power transmission mechanism 3 is taken as an example. In another aspect of the present invention, the housing HS that accommodates at least the motor 2 may be used. In this case, the power transmission mechanism 3 may or may not be accommodated in the same housing HS.

In another aspect of the present invention, the housing HS that accommodates at least the inverter 7 may be used. In this case, the power transmission mechanism 3 may or may not be accommodated in the same housing HS.

In another aspect of the present invention, the housing HS that accommodates at least the battery may be used. The battery may be, for example, the drive battery 91 (see FIG. 8). In this case, the power transmission mechanism 3 may or may not be accommodated in the same housing HS.

In an aspect of the present invention, the power transmission mechanism 3 includes, for example, a gear mechanism and an annular mechanism.

The gear mechanism includes, for example, a reduction gear mechanism, an acceleration gear mechanism, and a differential gear mechanism (differential mechanism).

The reduction gear mechanism and the acceleration gear mechanism include, for example, a planetary gear mechanism and a parallel gear mechanism.

The annular mechanism includes, for example, an endless annular component.

The endless annular component includes, for example, a chain sprocket, a belt and a pulley.

The differential mechanism 5 is, for example, a bevel gear type differential gear or a planetary gear type differential gear.

The differential mechanism 5 includes a differential case as an input element, two output shafts as output elements, and a differential gear set as a differential element.

In the bevel gear type differential gear, the differential gear set includes bevel gears.

In the planetary gear type differential gear, the differential gear set includes planetary gears.

The unit 1 includes a gear that rotates integrally with the differential case.

For example, a final gear (differential ring gear) of the parallel gear mechanism rotates integrally with the differential case. For example, when a carrier of the planetary gear mechanism is connected to the differential case, a pinion gear rotates (revolves) integrally with the differential case.

For example, a reduction gear mechanism is connected downstream of the motor 2. A differential gear mechanism is connected downstream of the reduction gear mechanism. That is, a differential gear mechanism is connected downstream of the motor 2 via a reduction gear mechanism. An acceleration gear mechanism may be used instead of the reduction gear mechanism.

A single-pinion type planetary gear mechanism can use, for example, a sun gear as an input element, a ring gear as a fixed element, and a carrier as an output element.

A double-pinion type planetary gear mechanism can include, for example, a sun gear as an input element, a ring gear as an output element, and a carrier as a fixed element.

As a pinion gear of the single-pinion type planetary gear mechanism or the double-pinion type planetary gear mechanism, for example, a stepped pinion gear or a non-stepped pinion gear can be used.

The stepped pinion gear includes a large pinion and a small pinion. For example, it is preferable to mesh the large pinion with the sun gear. For example, it is preferable to fit the small pinion into the ring gear.

The non-stepped pinion gear is not a stepped pinion gear.

In the present embodiment, an example in which the unit 1 is mounted on a vehicle has been described, but the present invention is not limited thereto, and the unit 1 can be applied to a device other than a vehicle. When a plurality of examples and modifications are described in the present embodiment, these examples and modifications may be freely combined.

The embodiment of the present invention has been described above, and the above embodiment is merely an application example of the present invention and is not intended to limit the technical scope of the present invention to the specific configuration of the above embodiment. The embodiment can be changed as appropriate within the scope of the technical idea of the invention.

### DESCRIPTION OF REFERENCE SIGNS

- 1: unit
- 3: power transmission mechanism
- 90: covering (heat exchange unit)
- 91: drive battery (electrical component)
- 92: ventilation port
- 93: box
- 95: fuel cell
- VH: vehicle
- VR: vehicle room
- HS: housing
- Lq: liquid

## Claims

1. A vehicle comprising:
a housing configured to accommodate a power transmission mechanism;
a covering having a portion that covers the housing; and
a liquid interposed between an outer surface of the covering and an outer surface of the housing.

2. The vehicle according to claim 1, wherein
the liquid is fuel cell drainage.

3. A vehicle comprising:
a housing configured to accommodate a power transmission mechanism; and
a heat exchange unit configured to perform heat exchange between the housing and a liquid that is fuel cell drainage.

4. The vehicle according to claim 1, further comprising:
an electrical component fixed to the outer surface of the housing, wherein
the electrical component includes a portion offset from the covering when viewed in a radial direction.

5. The vehicle according to claim 2, further comprising:
an electrical component fixed to the outer surface of the housing, wherein
the electrical component includes a portion offset from the covering when viewed in a radial direction.

6. The vehicle according to any one of claims 1 to 5,
the housing being positioned on a vehicle rear side of a vehicle room, the vehicle further comprising:
a ventilation port configured to communicate with a space in which the housing is disposed, in the vehicle room.
